# EUROPÄISCHE PATENTSCHRIFT

(11) **EP 0 344 475 B1**
(45) Veröffentlichungstag und Bekanntmachung des Hinweises auf die Patenterteilung: **05.04.1995**
(21) Anmeldenummer: 89107864.4
(22) Anmeldetag: 29.04.1989
(51) Int. Cl.: G06K 11/06

(54) **Dateneingabe-Tablett**
Data input tablet
Tablette pour l'entrée de données

(30) Priorität: 28.05.1988 DE 3818170
(43) Veröffentlichungstag der Anmeldung: 06.12.1989
(73) Patentinhaber: Preh-Werke GmbH & Co. KG, 97616 Bad Neustadt (DE)
(72) Erfinder: Berthold, Gottfried, Dr. rer. nat., D-7410 Reutlingen (DE); Ambros, Peter, Dipl.-Chem., D-8741 Leutershausen (DE); Müller, Walter, D-8740 Salz (DE)

(56) Entgegenhaltungen:
- GB-A- 2 148 011
- US-A- 4 207 444
- ELEKTRONIK. Bd. 35, Nr. 14, Juli 1986,MUNCHEN DE Seiten 92 - 96; G. BERTHOLD: 'Potentiometrische Sensoren als Weggeber und Stellungsmelder'

## Beschreibung

Die Erfindung behandelt ein Dateneingabe-Tablett nach dem Oberbegriff des Anspruches 1.

Ein entsprechendes Dateneingabe-Tablett ist aus der US-A-4 207 444 bekannt. Zwei elektrisch leitfähige Ebenen stehen sich mit überwindbarem Abstand gegenüber. Um die kapazitive Kopplung der beiden Ebenen zu mindern ist die eine, der Betätigung des Tabletts dienende Ebene, durch ein Siebgewebe dargestellt. Die elektrische Leitfähigkeit des Siebgewebes wird durch die Leitfähigkeit seines Gewebefadens erbracht. Die Innenflächen der Maschen des Siebgewebes sind nicht elektrisch leitfähig. Ein Strich auf der Betätigungsfläche kann deshalb nur gerastert, d.h. im Raster des Siebgewebes wiedergegeben werden.

Die JP 60-150124 A beschreibt ein solches Dateneingabe-Tablett mit transparenten Flächenelektroden. Dabei ist der durch den Rahmen geschaffene Raum zwischen den Flächenelektroden abgedichtet und mit einer isolierenden, viskosen Masse gefüllt.

Weiterhin ist aus der EP 0 194 861 A2 ein Dateneingabe-Tablett bekannt, mit einem leitfähigen Gitter zwischen den durch einen Rahmen auf Abstand gehaltenen leitfähigen Oberflächen.

Derartige Eingabe-Tabletts werden benutzt, um die Koordinaten einer mit Schreibdruck auf die Eingabefläche des Tabletts einwirkenden Schreibspitze, z.B. eines Griffels, zu erfassen und diese der elektronischen Weiterverarbeitung, etwa der Darstellung auf einem Bildschirm, zugänglich zu machen (DE 36 02 061 A1). Um die sich gegenüberstehenden, elektrisch leitfähigen Flächen ohne die Wirkung der Schreibspitze auf Abstand zu halten, sind derartige Einrichtungen mit Abstandshaltern ausgerüstet, die beispielsweise punktförmig oder strichförmig sein können und sich innerhalb der Eingabefläche verteilen. Flächenteile der Eingabefläche, die solchen Abstandshaltern unmittelbar zuzuordnen sind, entfallen für die Koordinatenerkennung.

Es ist somit Aufgabe der Erfindung, ein Dateneingabe-Tablett der eingangs genannten Art vorzuschlagen, bei dem auf Abstandshalter innerhalb der Eingabefläche verzichtet werden kann und bei dem der Verlauf einer Linie kontinuierlich eingebbar ist. Die Aufgabe wird durch das das Merkmal des Anspruches 1 gelöst.

Mit einem solchen Dateneingabe-Tablett, dessen Schreibfläche freitragend gespannt ist, kann die Linienführung der Schreibspitze kontinuierlich erfaßt werden; elektronische Nachführschaltungen zur Überbrückung von Erfassungslücken an den Abstandshaltern können entfallen. Die elektrische Auslegung des Dateneingabe-Tabletts ist entsprechend den Erfordernissen der Datenerfassungselektronik gestaltbar. So sind bedarfsweise z.B. die sich gegenüberstehenden Oberflächen der starren und der elastisch verformbaren Ebene in gleicher Weise homogen oder im Muster mit Widerstandsfilm belegt (DE-A-36 02 061). Denkbar ist auch ein über Punktelektroden allseitig angeschlossener Flächenwiderstand auf der Oberfläche der starren Ebene, dem eine Oberfläche mit hoher Leitfähigkeit gegenüberliegt, die unter der Einwirkung einer Schreibspitze als Sammelschiene dient. Eine derartige Sammelschiene kann einen systemspezifischen, elektrisch funktionellen Abtaststift ersetzen (EP-B-0 112 975).

Siebgewebe aus metallbeschichteten Polymerfasern sind spannstabil und relativ unempfindlich gegenüber scharfkantigen Gegenständen. Dabei haben sich für die Anwendung im Eingabe-Tablett Gewebe aus nickelbeschichteten Polyesterfasern besonders bewährt. Der Oberflächen-Abstand der Ebenen wird ausschließlich durch einen rahmenförmigen Abstandshalter bestimmt. Der Abstand ist in der Konzeptionsphase des Dateneingabe-Tabletts bestimmbar, wobei zu beachten ist, daß 0,2 mm Abstand einen geringeren Schreibdruck abfordert, wogegen 0,6 mm Abstand die Anordnung weniger sensibel werden läßt für flächig aufliegende Gegenstände, z.B. für eine aufliegende Schreibhand. Die Leitbeschichtung der Siebinnenfläche kompensiert die Gewebestruktur des Siebes, außerdem stabilisieren Kohle-Leitlacke den Kontaktwiderstand. Eine Isolierschicht, insbesondere eine einlaminierte Isolierschicht, glättet die Schreibfläche und verfeinert somit das Schreibgefühl. Thermoplast als Bindemittel bzw. als Isoliermittel versprödet in nur geringem Maße, es stützt die Elastizität der Siebfläche.

Frei von Abstandshaltern innerhalb der elektrisch beschichteten, starren Ebene, muß dieselbe frei von Unebenheiten sein, um Fehlfunktionen zu vermeiden. Es ist daher von Vorteil, die Beschichtung der starren Ebene als Laminat zu erstellen (DE-A-33 22 382), wobei das Substrat (z.B. aus Aluminium) so bemessen sein sollte, daß die letztlich am Substrat angreifenden Sieb-Spannkräfte dasselbe nicht verbiegen.

Nachstehend ist die Erfindung anhand eines Ausführungsbeispieles näher erläutert. Dabei zeigen
- Figur 1: die schematische Darstellung eines Dateneingabe-Tabletts im Schnitt
- und:
- Figur 2: desgleichen unter der Einwirkung einer Schreibspitze.

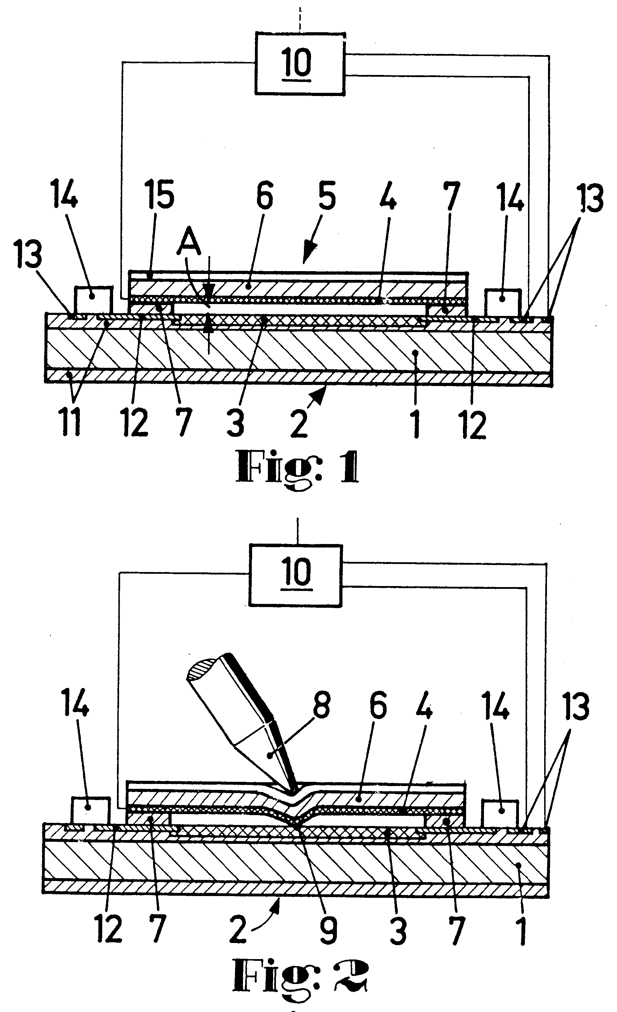

Ein biegestabiles Substrat (1) aus z.B. Aluminium oder aus einem anderen elektrisch leitenden oder isolierenden Material, das die starre Ebene (2) des Dateneingabe-Tabletts darstellt, ist einseitig mit einer Widerstandsschicht (3) ausgestattet, welche die Leitfläche (3) der starren Ebene (2) bildet. Der Widerstandsschicht (3) gegenüber angeordnet ist die Leitfläche (4) der elastisch verformbaren Ebene (5). Die elastisch verformbare Ebene ist ein Sieb (6), das von einem Rahmen (7) unter Spannung getragen wird, so, daß das Sieb (6) bzw. dessen Leitschicht (4) als Leitfläche (4) der elastisch verformbaren Ebene (5) die Widerstandsschicht (3) freitragend im Abstand (A) überdeckt. Unter dem Druck einer Schreibspitze (8) (Figur 2) verformt sich das Sieb (6) und dessen Leitschicht (4) kontaktiert nach Überwindung des Abstandes (A) die Widerstandsschicht (3) in einem Kontaktpunkt (9). Eine Auswerteschaltung (10) erfaßt die Koordinaten des Kontaktpunktes (9) auf der Widerstandsschicht und bildet entsprechende elektrische Signale zur Weiterverarbeitung.

Das Substrat (1) des Ausführungsbeispieles ist beidseitig mit einem Heißkleber (11) beschichtet; beidseitig deshalb, um eine Biegebelastung des Substrates durch die Beschichtung zu vermeiden. Mit Hilfe der Umkehrlaminiertechnik ist in die Heißkleberschicht (11) der einen Seite des Substrates (1) eine Widerstandsschaltung einlaminiert, mit einer sehr glatten Oberfläche. Die Widerstandsschaltung umfaßt die Widerstandsschicht (3), welche mit ihrer Oberfläche die elektrisch leitende Oberfläche der starren Ebene (2) bildet, sie umfaßt weiterhin die Anschlußelektroden (12) der Widerstandsschicht (3) und Anschlußleiterbahnen (13). Die als Punktelektroden allseitig die Widerstandsschicht (3) kontaktierende Anschlußelektroden (12) sind über Sperrdioden (14) mit den Anschlußleiterbahnen (13) verbunden. Die Widerstandsschaltung entspricht den Ausführungen der EP-B-0 112 975.

Das Siebgewebe (6) ist einseitig mit einem thermoplastischen Leitlack (4), mit hoher Leitfähigkeit, beschichtet; die Oberfläche der Leitlackschicht (4) bildet die elektrisch leitende Oberfläche der elastisch verformbaren Ebene (5), die innerhalb des Dateneingabe-Tabletts der Widerstandsschicht (3) diese überspannend gegenübersteht. Der Leitlack wird mittels Siebdruck auf das feinmaschige Gewebe aufgetragen. Auf die zweite, als Außenseite vorgesehene Seite des Siebgewebes (6) ist eine thermoplastische Isolierfolie (15) laminiert. Das Beschichten des Siebgewebes (6) sowie das Trocknen der Beschichtungen (4, 15) erfolgen bei in einer Spannvorrichtung gespannt gehaltenem Siebgewebe. Solche Spannvorrichtungen sind in der Siebdrucktechnik gebräuchlich. Auf das beschichtete und noch gespannt gehaltene Siebgewebe wird ein beidseitig mit Epoxykleber belegter Rahmen (7) auf die mit Leitlack (4) beschichtete Seite des Siebes (6) aufgelegt. Der Spannrahmen (7) ist aus einem elektrisch isolierenden Material, z.B. Hartpapier, mit einer Dicke von beispielsweise 0,5 mm. Auf den Rahmen (7) ist das vorab fertiggestellte Substrat (1) in Ausrichtung zur Widerstandsschicht aufgelegt. Nachdem unter dem Einfluß von Druck und Wärme das Substrat (1) mit dem Rahmen (7) und der Rahmen (7) mit dem Siebgewebe (6) bleibend verbunden sind, bildet der Rahmen (7) den Abstand (A). Aus der Spannvorrichtung entnommen oder freigeschnitten bleibt das Siebgewebe (6) über den am Substrat (1) versteiften Rahmen (7) gespannt.

### Bezugszeichenliste zu 06/88 Pt.

- 1: Substrat
- 2: starre Ebene
- 3: Widerstandsschicht
- 4: Leitschicht
- 5: elastische Ebene
- 6: Sieb
- 7: Rahmen
- 8: Schreibspitze
- 9: Kontaktpunkt
- 10: Auswerteschaltung
- 11: Heißkleber
- 12: Anschlußelektrode
- 13: Anschlußleiterbahn
- 14: Diode
- 15: Isolierschicht

- A: Abstand

## Patentansprüche

1. Dateneingabe-Tablett zur elektrischen Erfassung der Koordinaten einer Schreibspitze (8), mit einer starren Ebene (2) und einer elastisch verformbaren Ebene (5), deren elektrisch leitfähige Oberflächen (3,4) sich durch einen Rahmen (7) auf Abstand gehalten mit geringem Abstand (A) elektrisch isoliert gegenüberstehen und die unter Einwirkung der Schreibspitze (8) auf die Außenfläche der verformbaren Ebene (5) punktförmig kontaktieren, wobei die elastisch verformbare Ebene (5) ein Siebgewebe (6) nach Art eines Siebes der Siebdrucktechnik ist, das wie bei der Siebtechnik auf einen Rahmen (7) gespannt gehalten ist,
dadurch gekennzeichnet,
daß die elektrisch leitfähige Oberfläche des Siebgewebes aus einer auf das Siebgewebe aufgetragenen, geschlossenen;
Leitschicht aus einem polymerem Bindemittel mit darin eindispergierten Leitpigmenten besteht.

2. Dateneingabe-Tablett nach Anspruch 1,
dadurch gekennzeichnet,
daß das Siebgewebe (6) ein feinmaschiges Gewebe aus mit Metall beschichteten Polymerfasern ist.

3. Dateneingabe-Tablett nach Anspruch 2,
dadurch gekennzeichnet,
daß die metallbeschichteten Polymerfasern nickelbeschichtete Polyesterfasern sind.

4. Dateneingabe-Tablett nach einem der Ansprüche 1 bis 3,
dadurch gekennzeichnet,
daß die eindispergierten Leitpigmenten aus Silber und/oder Graphit und/oder Ruß sind.

5. Dateneingabe-Tablett nach einem der Anspruche 1 bis 4,
dadurch gekennzeichnet,
daß das polymere Bindemittel ein Thermoplast ist.

6. Dateneingabe-Tablett nach einem der Ansprüche 1 bis 5,
dadurch gekennzeichnet,
daß die von den Kontaktflächen abliegende Außenfläche des Siebgewebes (6) zusätzlich mit einer Isolierschicht (15) versehen ist.

7. Dateneingabe-Tablett nach Anspruch 6,
dadurch gekennzeichnet,
daß die Isolierschicht (15) aus einer einlaminierten Folie aus thermoplastischem Material besteht.

8. Dateneingabe-Tablett nach einem der Ansprüche 1 bis 7,
dadurch gekennzeichnet,
daß die starre Ebene (2) von einem beschichteten Substrat (1) aus Aluminium gebildet ist.

## Claims

1. Data input tablet for electrical detection of the coordinates of a writing point (8), having a rigid plane (2) and an elastically deformable plane (5), the electroconductive surfaces (3, 4) of which oppose one another, kept at a distance by a frame (7) and electrically insulated with a small spacing (A), and which surfaces contact in a punctiform manner under the effect of the writing point (8) on the outer surface of the deformable plane (5), wherein the elastically deformable plane (5) is a mesh screen (6) like a screen of screen printing technology, which is held taut on a frame (7) as in screen technology, characterized in that the electroconductive surface of the mesh screen consists of a closed conductive layer applied to the mesh screen and consisting of a polymeric bonding agent with conductive pigments dispersed therein.

2. Data input tablet according to claim 1, characterized in that the mesh screen (6) is a fine-meshed screen of polymer fibres coated with metal.

3. Data input tablet according to claim 2, characterized in that the metal-coated polymer fibres are nickel-coated polyester fibres.

4. Data input tablet according to one of claims 1 to 3, characterized in that the dispersed conductive pigments are of silver and/or graphite and/or carbon black.

5. Data input tablet according to one of claims 1 to 4, characterized in that the polymeric bonding agent is a thermoplast.

6. Data input tablet according to one of claims 1 to 5, characterized in that the outer surface of the mesh screen (6) away from the contact surfaces is additionally provided with an insulating layer (15).

7. Data input table according to claim 6, characterized in that the insulating layer (15) consists of a laminated film of thermoplastic material.

8. Data input tablet according to one of claims 1 to 7, characterized in that the rigid plane (2) is formed from a coated substrate (1) of aluminium.

## Revendications

1. Plaquette d'entrée de données, destinée à relever par voie électrique les coordonnées d'une pointe marqueuse (8) et comportant un plan rigide (4) et un plan (5) déformable élastiquement, dont les faces conductrices (3, 4) se font vis-à-vis, sont maintenues isolées électriquement, à une distance (A) faible, l'une de l'autre, par un cadre (7) et qui, sous l'action de la pointe marqueuse (8), viennent en contact ponctuel sur la face extérieure du plan déformable (5), ce dernier étant un écran tissé (6), du genre d'un écran de sérigraphie, qui est, comme en sérigraphie, maintenu tendu par le cadre (7), plaquette caractérisée en ce que la face électriquement conductrice de l'écran est formée d'une couche conductrice compacte, déposée sur l'écran et composée d'un liant polymère dans lequel sont dispersés des pigments conducteurs.

2. Plaquette d'entrée de données selon la revendication 1, caractérisée en ce que l'écran (6) est un tissu à mailles fines en fibres d'un polymère à revêtement métallique.

3. Plaquette d'entrée de données selon la revendication 2, caractérisé en ce que les fibres du polymère à revêtement métallique sont des fibres de polyester recouvertes de nickel.

4. Plaquette d'entrée de données selon l'une des revendications 1 à 3, caractérisée en ce que les pigments conducteurs dispersés sont des pigments d'argent et/ou de graphite et/ou de noir de fumée.

5. Plaquette d'entrée de données selon l'une des revendications 1 à 4, caractérisée en ce que le liant polymère est une matière thermoplastique.

6. Plaquette d'entrée de données selon l'une des revendications 1 à 5, caractérisée en ce que la face de l'écran (6) qui est opposée aux faces de contact est revêtue d'une couche isolante (15).

7. Plaquette d'entrée de données selon la revendication 6, caractérisée en ce que la couche isolante (15) est constituée par une feuille mince d'une matière thermoplastique fixée par collage de stratification.

8. Plaquette d'entrée de données selon l'une des revendications 1 à 7, caractérisée en ce que le plan rigide (2) est formé par un substrat (1) en aluminium enduit.
